(19) Europäisches Patentamt
European Patent Office
Office européen des brevets

(11) Numéro de publication: 0 201 375
B1

(12) FASCICULE DE BREVET EUROPÉEN

(45) Date de publication du fascicule du brevet: 21.03.90

(51) Int. Cl. [5]: G 01 N 27/12

(21) Numéro de dépôt: 86400694.5

(22) Date de dépôt: 28.03.86

# (54) Oxynitrures utiles comme détecteurs sélectifs de gaz réducteurs dans l'atmosphère, et dispositif de détection les contenant.

(30) Priorité: 02.04.85 FR 8504989

(43) Date de publication de la demande:
12.11.86 Bulletin 86/46

(45) Mention de la délivrance du brevet:
21.03.90 Bulletin 90/12

(84) Etats contractants désignés:
DE GB

(56) Documents cité:
FR-A-2 106 112
US-A-4 197 089

(73) Titulaire: Etablissement Public dit: CENTRE NATIONAL DE LA RECHERCHE SCIENTIFIQUE (CNRS)
15, Quai Anatole France
F-75007 Paris (FR)
Titulaire: UNIVERSITE DE RENNES I
2, rue du Thabor
F-35000 Rennes (FR)

(72) Inventeur: Colin, Yves
20, rue Beaumonoir Thorigné Fouillard
F-35510 Cesson Sevigne (FR)
Inventeur: Rosse, Gabriel
20, rue de la Nida
F-35100 Rennes (FR)
Inventeur: Guyader, Jean
Le Monthelon
F-35690 Acigne (FR)
Inventeur: Laurent, Yves
Les Landes de Billé Thorigné Fouillard
F-35510 Cesson Sevigne (FR)

(74) Mandataire: Ahner, Francis
CABINET REGIMBEAU 26, avenue Kléber
F-75116 Paris (FR)

EP 0 201 375 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe dipposition (Art. 99(1) Convention sur le brevet européen).

LIBERGRAF, STOCKHOLM 1990

**Description**

La présente invention concerne des oxynitrures utiles comme détecteurs sélectifs de gaz réducteurs azotés dans l'atmosphère en particulier d'ammoniac et de gaz contenant des groupements NH et/ou $NH_2$, ainsi que des dispositifs de détection sélective contenant lesdits oxynitrures.

Dans la technique antérieure, voir, par exemple, "Homogeneous semi-conducting gas sensor" G.Heiland, Sensors and Actuators, Tome II (1982), page 343, la plupart des capteurs de gaz utilisant comme paramètre de détection la résistance électrique d'une couche semiconductrice mettent en oeuvre des oxydes plus ou moins dopés, tels que $SnO_2$ ou ZnO, qui sont relativement sensibles à différents gaz réducteurs. Cependant, aucun d'entre eux, quel que soit le phénomène physicochimique sur lequel repose son fonctionnement, n'est particulièrement sélectif pour les gaz réducteurs azotés et en particulier pour l'ammoniac, avec une fiabilité souhaitable. Tous ces capteurs présentent des qualités moyennes de sensibilité, sélectivité et fidélité; ils exigent en outre une importante maintenance. Il est absolument impossible de les utiliser efficacement en tant que capteurs sélectifs par exemple d'ammoniac.

La présente invention a précisément eu pour but d'écarter ces inconvénients, et il a ainsi été envisagé de faire appel à un grand nombre d'autres composés qui sont à la fois stables dans un large domaine de température, notamment en présence d'ammoniac ou d'humidité, et qui sont également susceptibles d'adsorber de l'oxygène de façon à favoriser la détection de gaz réducteurs azotés et plus spécifiquement de l'ammoniac.

Conformément à la présente invention, on utilisera à titre de détecteurs sélectifs de gaz réducteurs azotés dans l'atmosphère, en particulier d'ammoniac et de gaz contenant des groupements NH et/ou $NH_2$, des oxynitrures à structure tétraédrique répondant à la formule générale:

$$Zn_x Ge O_y N_z$$

dans laquelle:

$1,47 \leq x \leq 1,90$
$0,93 \leq y \leq 1,75$
$1,28 \leq z \leq 1,69$

Etant donné que ces oxynitrures sont fabriqués sous ammoniac et sont physiquement très stables aux températures usuelles, ils présentent l'avantage déterminant de ne pas réagir directement avec l'ammoniac à ces températures. En revanche, l'oxygène de l'air qu'ils adsorbent par un phénomène de chimisorption forte, réagit de façon réversible avec les gaz réducteurs azotés tels que l'ammoniac dans un domaine de température qui dépend en particulier des conditions de préparation influençant la stoechiométrie de ces oxynitrures.

Ces oxynitrures peuvent être préparés de manière en soi connue, par exemple par action de l'ammoniac gazeux à des températures comprises entre 700 et 1000°C sur des oxydes doubles d'un métal Zn d'une part et d'un élément Ge, d'autre part.

Des oxynitrures doubles de Germanium et de zinc de diverses stoechiométries ont par exemple été préparés par action d'un courant d'ammoniac à différentes températures pendant des temps différents sur l'orthogermanate de zinc ($Zn_2 GeO_4$) coprécipité et calciné. Pour la préparation des oxynitrures utilisés dans le cadre de la présente invention, on se rapportera par exemple à C.R. Acad. Sc., Paris, t. 270, p. 2052 - 2055 (22 juin 1970) et Mat. Res. Bull. Vol. 5, p. 793 - 796 (1970).

Ces oxynitrures proposés possèdent une concentration en électrons de valence supérieure ou égale à 4 et présentent une structure tétraédrique dérivée de celle de la wurtzite avec occupation de la moitié des sites tétraédriques par les cations. De tels oxynitrures se présentent sous la forme de poudres qu'il est possible de pastiller sous pression ou encore de déposer en couche épaisse.

Les conditions de chimisorption et de désorption de l'oxygène en fonction de la température ont été déterminées, ainsi que les conditions de restauration des propriétés électriques initiales. Le domaine de température pour la réaction optimale réversible de l'ammoniac avec l'oxygène adsorbé a été fixe. On a ainsi pu enregistrer à une température convenablement choisie, une détection de 20 à 2000 ppm de $NH_3$ dans un flux d'air, avec une variation maximale de 40 à 50 % de la résistance, un temps de réponse à un échelon de $NH_3$ et un temps de restitution de 1 à 2 min.

Ces oxynitrures peuvent donc être avantageusement utilisés pour la fabrication de dispositifs de détection sélective dans l'atmosphère de gaz réducteurs azotés et en particulier d'ammoniac ainsi que d'autres gaz contenant les groupements NH et/ou $NH_2$.

Conformément à la présente invention, un tel dispositif de détection comporte une couche semi-conductrice à base d'un tel oxynitrure placée sur un support muni d'un moyen de chauffage pouvant par exemple atteindre une température de 100 à 250°C, ainsi qu'un moyen de mesure de la variation de la résistance de ladite couche en réponse à la chimisorption des gaz réducteurs azotés sur ladite couche, le moyen de mesure fournissant un signal représentatif de la variation de la concentration desdits gaz au voisinage de cette couche. En fonction des applications particulières envisagées, il pourra s'agir d'un signal sonore, lumineux, ou encore de l'affichage d'une teneur en gaz réducteurs azotés sur une échelle graduée par exemple directement en ppm d'ammoniac.

De tels dispositifs de détection sélective dans l'atmosphère de gaz réducteurs azotés trouvent par exemple leur application dans des installations frigorifiques équipées de seuils d'alarme. Il convient en effet de rappeler qu'actuellement environ 70 % des fluides frigorigènes utilisés sont constitués par de l'ammoniac.

De tels détecteurs trouvent également leur application dans l'industrie laitière, celle de l'acide nitrique et des engrais, les conserveries, les tanneries, les élevages et les abattoirs, où l'on opère la combustion des déchets animaux.

De tels dispositifs de détection trouvent également leur application dans le domaine de l'enrichissement des terres en azote par injection directe d'ammoniac. L'objet de la présente invention permet en outre d'assurer une surveillance de silos dans lesquels on réalise une complémentation azotée de l'alimentation du bétail, par exemple par injection d'ammoniac anhydre au moment du passage du maïs dans l'ensileuse. On précisera également que dans le domaine de l'agroalimentaire, l'ammoniac accompagne souvent d'autres polluants atmosphériques. La détection de l'ammoniac permet donc de prévenir non seulement l'apparition de ce gaz à des doses insupportables ou dangereuses, mais aussi celle de gaz d'accompagnement.

De nombreuses expérimentations ont été conduites pour vérifier les conditions de chimisorption et de désorption de l'oxygène ainsi que le domaine de température optimale de réaction réversible de l'ammoniac avec l'oxygène adsorbé. De manière à illustrer l'ensemble de ces propriétés on indiquera ci-après les résultats de l'expérimentation conduite sur un oxynitrure particulier, à savoir l'oxynitrure de formule:

$Zn_{1,64}\,Ge\,O_{1,16}\,N_{1,66}$.

Les courbes traduisant les résultats observés figurent sur les dessins annexes, sur lesquels:

- la figure 1 représente les variations, en fonction de la température thermodynamique, de la résistance électrique R de pastilles de $Zn_{1,64}\,Ge\,O_{1,16}\,N_{1,66}$ (courbe de référence),
- les figures 2 à 4 illustrent les modifications de la conductibilité électrique de cet oxynitrure sous l'effet de la chimisorption d'oxygène et de la désorption programmée en fonction de la température thermodynamique,
- la figure 5 représente les variations de la conductibilité électrique au cours d'adsorptions et de désorptions isothermes en fonction de la température $\theta_a$ d'adsorption/désorption,
- la figure 6 représente la désorption isotherme de l'oxygène en fonction de la température $\theta_a$ d'adsorption/désorption,
- la figure 7 représente les variations de résistance de cet oxynitrure consécutivement à la réaction de $NH_3$ avec l'oxygène chimisorbé à la surface de l'oxynitrure,
- la figure 8 représente les variations de résistance de l'oxynitrure par action de quelques gaz réducteurs,
- la figure 9 représente les variations de résistance de cet oxynitrure en présence d'humidité.

On expliquera ci-après plus en détail les conditions et les résultats de l'expérimentation conduite sur $Zn_{1,64}\,Ge\,O_{1,16}\,N_{1,66}$ en regard des figures annexées.

**1 - Conductibilité éléctrique des pastilles de $Zn_xGeO_yN_z$ sous vide**

(x = 1,47 à 1,90; y = 0,93 à 1,75; z = 1,28 à 1,69)

7 échantillons de poudres cristallines comprimées de compositions diverses, comprises dans les limites précisées ci-dessus, ont été testés. Puisque le matériau chimisorbe facilement l'oxygène la seule caractéristique de référence en ce qui concerne la conduction électrique est celle que l'on peut obtenir après dégazage sous vide secondaire, à la température de travail maximum que l'on admet de s'imposer. Cette caractéristique, quel que soit l'échantillon, a toujours l'allure de celle de la figure 1 relative à un échantillon E de teneur moyenne en zinc (x = 1,64; y = 1,16 et z = 1,66) donnant la résistance R en fonction de la température thermodynamique T, dégazé pendant plusieurs heures à 400°C sous une pression résiduelle d'environ $10^{-3}$ Pa.

La pente et la valeur moyenne du log de la résistance varient avec la composition, l'augmentation de la teneur en zinc conduisant à une diminution de la résistance. On remarque que, dans tous les cas, la valeur R de celle-ci et la valeur α (négative) de son coefficient de température sont très élevées: R de l'ordre du MΩ vers 200°C; α de l'ordre de $-3.10^5$ Ω/K à cette température. Il convient cependant de noter qu'une réduction importante de ces valeurs peut être obtenue par dopage et par traitement thermique, sans nuire pour autant aux propriétés adsorbantes des échantillons.

**2 - Action de l'oxygène sur la conductibilité éléctrique**

**a) Chimisorption**

De nombreuses expériences prouvant la reproductibilité des phénomènes observés ont été effectuées. La figure 2 relative au même échantillon E montre à $3,2.10^{-3}K^{-1}$ (~ 39,5°C) l'effet d'une adsorption isotherme d'oxygène (b) à partir d'un point de la courbe de référence (a): la résistance augmente d'environ deux ordres de grandeur, mettant en évidence la chimisorption forte de l'oxygène: le gaz chimisorbé joue le rôle d'accepteur d'électrons, et diminue ainsi la conductivité subsuperficielle de la pastille.

**b) Désorption**

Par une désorption isotherme, seule une très faible proportion de gaz adsorbé est libérée (c). Une

désorption programmée en température (DPT) à la vitesse de 3°K/min. conduit à la courbe (d) de forme classique en ce domaine, qui à partir de 570°K (297°C) se confond avec la caractéristique de référence (a): ceci démontre que tout l'oxygène est désorbé, la surface du matériau a été régénérée.

La variation de résistance sous l'effet de la chimisorption de l'oxygène et la facilité de désorption de celui-ci, isotherme ou programmée en température, dépendent de la température d'opération comme le montrent les courbes des figures 2, 3 et 4. Toutefois, un recuit sous vide ($10^{-3}$ Pa) de l'ordre de 30 min. à 350°C restaure toujours les propriétés superficielles de l'échantillon en ramenant (flèche e) le point de la caractéristique de DPT à la caractéristique de référence.

**c) Recherche d'un domaine de température optimal pour la détection de gaz réducteur**

Deux groupes de grandeurs sont intéressants pour une température d'adsorption/désorption donnée dans l'optique de la réalisation d'un capteur de gaz réducteur:

- la variation totale de la résistance obtenue en régime définitif d'adsorption isotherme de l'oxygène et la vitesse de variation correspondante,
- la variation totale de la résistance obtenue en régime définitif de désorption isotherme de l'oxygène et la vitesse de variation correspondante.

La température d'utilisation du matériau comme capteur d'un gaz réducteur particulier résultera d'un compromis à trouver entre ces différentes grandeurs.

C'est dans cet esprit qu'ont été relevées les isothermes $R/R_0 = f(t)$ de chimisorption/désorption de l'oxygène ($R_0$ résistance initiale; R résistance en présence de particules adsorbées; t variable temps). Afin d'éviter la diffusion de l'oxygène dans le réseau cristallin des grains semiconducteurs, la durée $t_a$ de l'adsorption sous pression atmosphérique a été limitée à 3 min., tandis que la durée $t_d$ de désorption conduisant à une valeur $R/R_0$ définitive est de l'ordre de 10 à 15 min. La figure 5 montre quelques résultats de ces études isothermes pour l'échantillon E de référence à diverses températures $\theta_a$ d'adsorption/désorption. On y remarque le passage de la capacité d'adsorption par un maximum au voisinage de 85°C. Le report de $R_3$ min./$R_0$ en fonction de $\theta_a$ (fig. 6), où $R_{3min.}$ ne représente une valeur de saturation que pour deux valeurs de $\theta_a$, indique le passage par un second maximum vers 170°C. Quant à la vitesse d'adsorption, on voit (fig. 5) qu'elle est plus faible au-dessous de 150°C et maximale vers 190°C.

En ce qui concerne la désorption isotherme de l'oxygène, la figure 6 déduite des courbes de la figure 5 montre qu'elle est de plus en plus efficace au-delà de 130°C, mais que la vitesse de



désorption passe par un maximum au voisinage de 170°C.

Le domaine de température le plus intéressant pour obtenir sensibilité et rapidité de réaction d'un gaz réducteur avec l'oxygène chimisorbé apparaît bien être compris entre 150 et 200°C ou tout au moins supérieur à 150°C pour l'échantillon étudié. Ce domaine dépend d'une façon générale des écarts à la stoechiométrie du matériau.

**3 - Action du gaz ammoniac sur une partille de $Zn_xGeO_yN_z$ dont la surface est saturée en oxygène**

L'oxygène utilisé ici est l'oxygène de l'air préalablement filtré et séché. Dans le dispositif expérimental ayant servi aux essais, la pastille, munie des fils de mesure de résistance fixés à sa surface par une laque d'argent, dont on a vérifié qu'elle ne jouait aucun rôle dans les phénomènes observés, est placée dans une enceinte thermostatée entre l'ambiante et 400°C. Une circulation de gaz (pur ou mélangé) peut être réalisée dans cette enceinte. La pastille est placée à l'arrivée du gaz dont on étudie les effets. Les débits gazeux sont mesurés et régulés de façon à connaître avec précision le nombre de ppm de gaz étranger dans l'air.

La figure 7 donne deux exemples de réaction de $NH_3$ avec l'oxygène chimisorbé à la surface de $Zn_x$ Ge $O_y$ $N_z$. On y voit le rôle joué par la température de travail tant sur la sensibilité du capteur que sur son temps de réponse. On remarquera que les temps de réponse de la figure 7b sont tout à fait satisfaisants pour un capteur de ce type.

La variation de la réponse en fonction de la teneur en ammoniac est sensiblement linéaire dans le domaine des faibles teneurs (< 1000 ppm). Le seuil de détection est voisin de 20 ppm. Au-delà de 1500 ppm (et selon les échantillons) on observe une saturation.

Dans ce domaine l'échantillon présenté comme référence a été étudié à fond et répond toujours, alors qu'il a fonctionné dans toutes sortes de conditions depuis plusieurs mois. Cassé, ses morceaux réutilisés répondent de la même manière.

Au cours de ces expérimentations, il a été noté que la sensibilité de la réaction est meilleure lorsque les gaz arrivent non thermalisés sur l'échantillon.

**4 - Action d'autres gaz réducteurs dans des conditions identiques à celles utilisées pour l'ammoniac**

L'effet de mélanges air-hydrogène, air-méthane, air-monoxyde de carbone, air-butane a été testé. Ces interférents de l'ammoniac, même à dose élevée, ne fournissent aux températures utilisées qu'une faible réaction et encore dans un sens opposé à celui de la réaction avec l'ammoniac (fig. 8). Après chaque essai on a obtenu la régénération du capteur en faisant passer de l'air sec filtré, et l'ammoniac a de nouveau produit son effet; ceci prouve que les interférents testés n'ont pas entraîné de pollution irrémédiable de la surface détectrice.

**5 - Action de l'humidité**

Les expérimentations ont été conduites à pression de vapeur saturante en eau à 20°C. Les résultats sont illustrés par les courbes des figures 9a et 9b. On voit que l'échantillon est sensible à l'humidité dans le même sens qu'il l'est à l'ammoniac (fig. 9) et que la sensibilité à l'ammoniac est considérablement augmentée en présence de vapeur d'eau.

Bien que ces manipulations revêtent un caractère uniquement exploratoire, on remarque toutefois que:

- la réponse à l'humidité est immédiate;
- réversible, et
- inférieure à la réponse à l'ammoniac.

Ces résultats recoupent ce qui a pu être observé de l'action de l'humidité sur le comportement des capteurs a base de ZnO.

Tous les résultats précédents confirment donc l'aptitude des nitrures et oxynitrures définis dans le cadre de la présente invention, et en particulier des oxynitrures de germanium et de zinc, à détecter sélectivement l'ammoniac.

**Revendications**

1. Détecteurs sélectifs de gaz réducteurs azotés dans l'atmosphère, en particulier d'ammoniac et de gaz contenant des groupements NH et/ou $NH_2$, du type à résistance semi-conductrice, à oxynitrures à structure tétraédrique répondant à la formule générale:

$Zn_x Ge O_y N_z$

dans laquelle:

$1,47 \leq x \leq 1,90$
$0,93 \leq y \leq 1,75$
$1,28 \leq z \leq 1,69$

2. Dispositif de détection sélective dans l'atmosphère de gaz réducteurs azotés, en particulier d'ammoniac et de gaz contenant des groupements NH et/ou $NH_2$, comprenant une couche semi-conductrice à base d'un oxynitrure selon la revendication 1, placée sur un support muni d'un moyen de chauffage, et un moyen de mesure de la variation de la résistance de ladite couche en réponse à la chimisorption des gaz réducteurs azotés sur ladite couche, le moyen de mesure fournissant un signal représentatif de la variation



de la concentration desdits gaz au voisinage de ladite couche.

3. Dispositif selon la revendication 2, caractérisé en ce que ledit moyen de chauffage élève la température dudit oxynitrure à une température comprise entre 100°C et 250°C.

**Patentansprüche**

1. Selektive Detektoren für reduzierende stickstoffhaltige Gase in der Atmosphäre, insbesondere für Ammoniak und für Gas enthalten die Gruppen NH und/oder $NH_2$, vom Typ eines Halbleiterwiderstandes aus Oxynitriden mit tetraedrischer Struktur, die der allgemeinen Formel entsprechen:

$Zn_x Ge O_y N_z$

worin:

$1,47 \leq x \leq 1,90$
$0,93 \leq y \leq 1,75$
$1,28 \leq z \leq 1,69$

2. Vorrichtung zur selektiven Detektion von reduzierenden stickstoffhaltigen Gasen in der Atmosphäre, inbesondere von Ammoniak und von Gas enthaltend die Gruppen NH und/oder $NH_2$, umfassend eine Halbleiterschicht auf Basis eines Oxynitrides nach Anspruch 1, aufgebracht auf einem Träger, versehen mit einer Erwärmungsvorrichtung, und einer Meßvorrichtung für die Änderung des Widerstandes dieses Halbleiters in Abhängigkeit der Chimisorption der reduktiven stickstoffhaltigen Gase auf dem Halbleiter, wobei die Meßvorrichtung ein repräsentatives Signal der Änderung der Konzentration dieses Gases in der Nähe dieses Halbleiters liefert.

3. Vorrichtung nach Anspruch 2, dadurch gekennzeichnet, daß die Erwärmungsvorrichtung die Temperatur des Oxynitrids auf eine Temperatur im Bereich zwischen 100°C und 250°C erhöht.

**Claims**

1. Selective detectors of nitrogenous reducing gases in the atmosphere, more particularly ammonia and gases containing NH and/or $NH_2$ groups, the detectors being of the semiconducting resistance kind and oxynitrides having a tetrahedral structure in accordance with the general formula:

$Zn_x Ge O_y N_z$ in which:

$1.47 \leq x \leq 1.90$
$0.93 \leq y \leq 1.75$
$1.28 \leq z \leq 1.69$

2. A device for selective detection in the atmosphere of nitrogenous reducing gases, more particularly ammonia and gases containing NH and/or $NH_2$ groups, comprising a semiconducting layer based on an oxynitride according to claim 1, disposed on a substrate comprising a heating means, and a means for measuring the variation in resistance of the layer in response to chemisorption of the nitrogenous reducing gases on the layer, the measuring means delivering a signal which represents the variation in the concentration of the aforementioned gases near the layer.

3. A device according to claim 2, characterised in that the heating means raises the temperature of the oxynitride to between 100°C and 250°C.

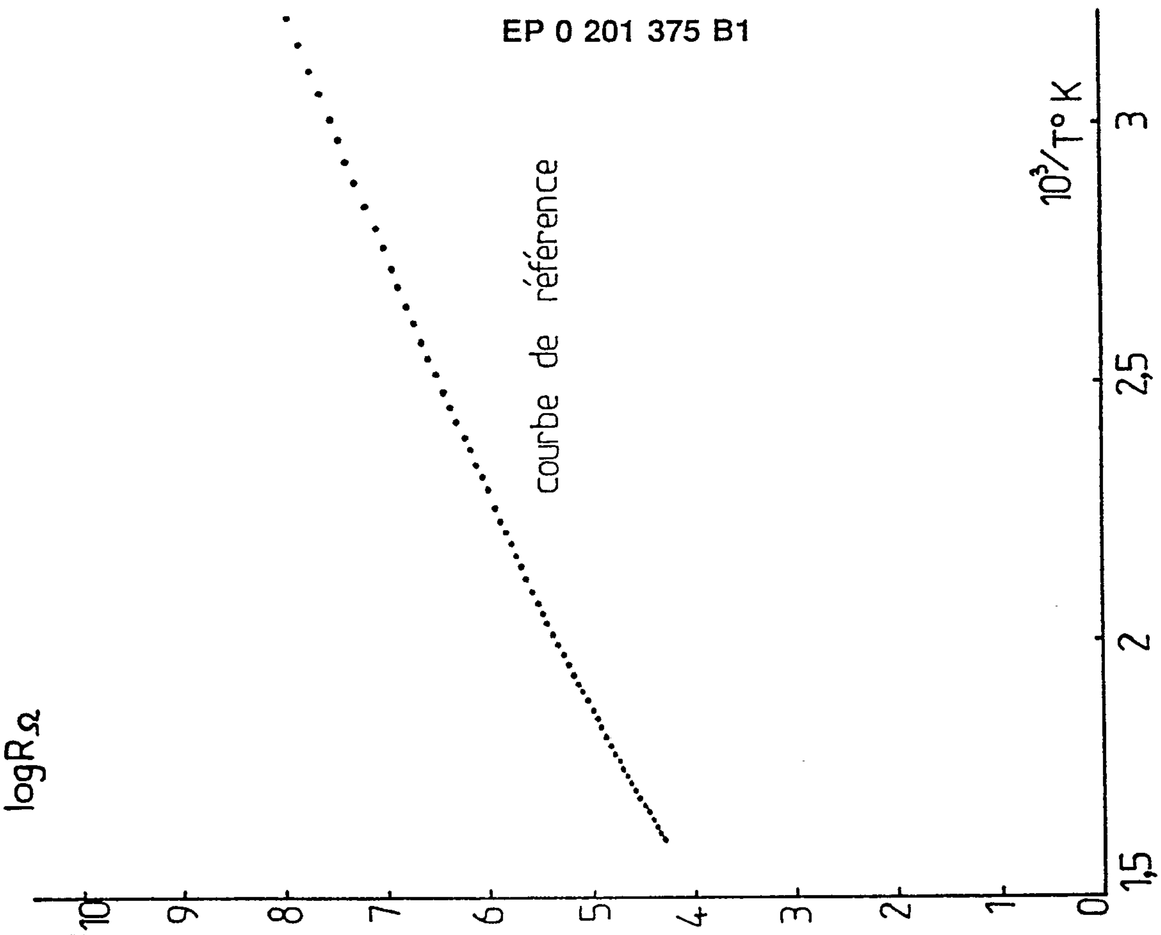
logRΩ
courbe de référence
10³/T° K
0
1
2
3
4
5
6
7
8
9
10
1,5
2
2,5
3

FIG-1

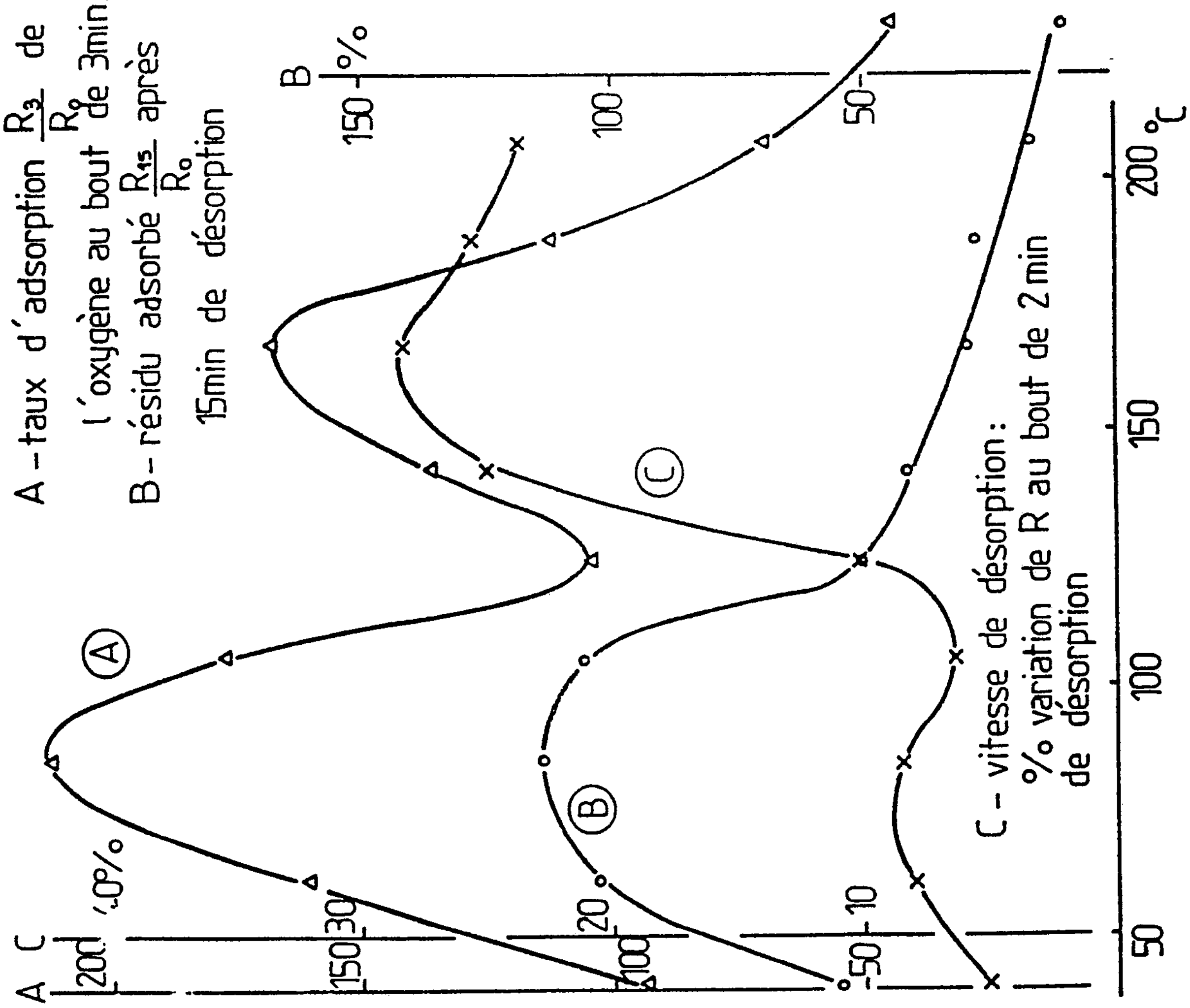
A – taux d'adsorption $\frac{R_3}{R_0}$ de l'oxygène au bout de 3min
B – résidu adsorbé $\frac{R_{15}}{R_0}$ après 15min de désorption
C – vitesse de désorption : % variation de R au bout de 2 min de désorption
A
C
%
200
150
30
20
100
10
50
B
%
150
100
50
50
100
150
200
°C

FIG-6

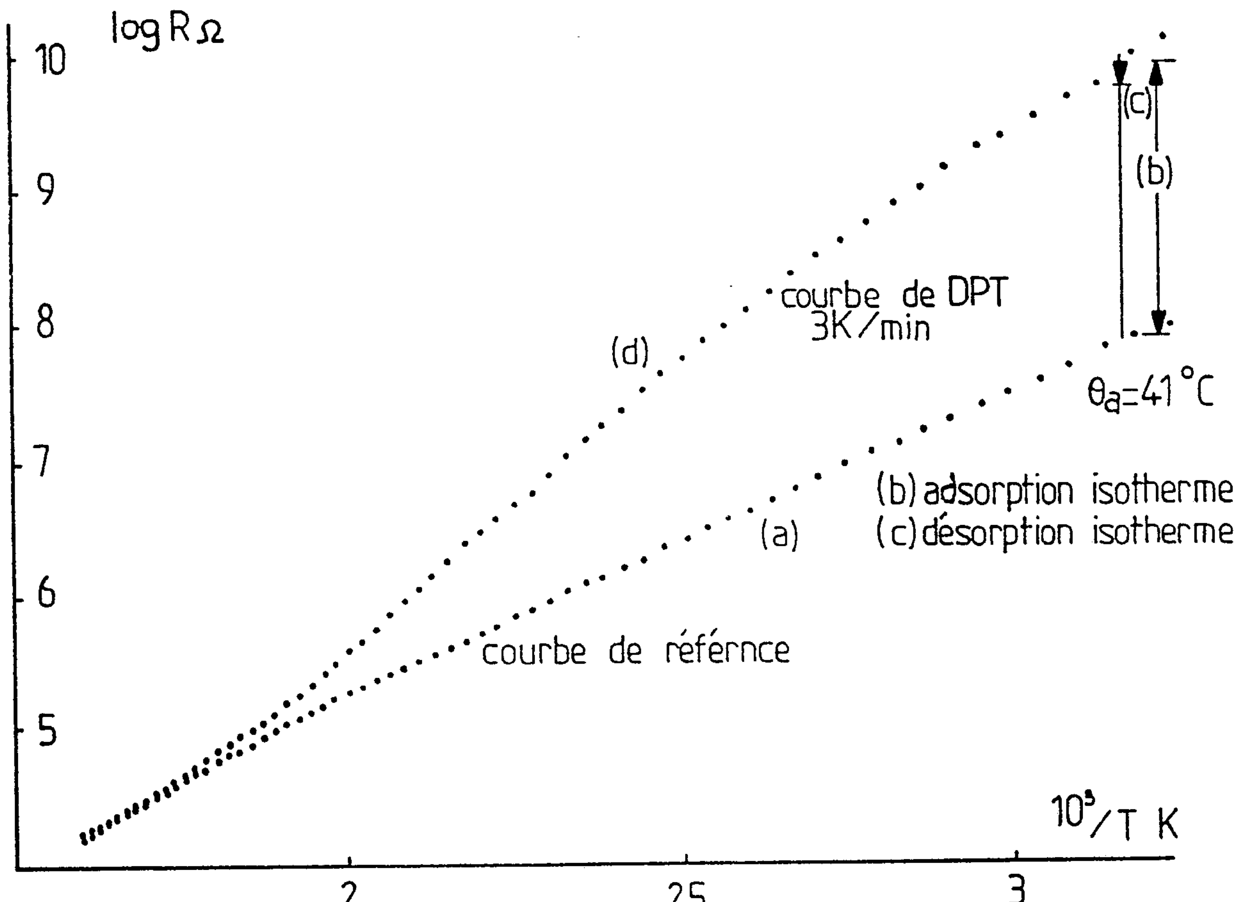
log R Ω
10
9
8
7
6
5
courbe de DPT
3K/min
(d)
(c)
(b)
θa=41 °C
(b) adsorption isotherme
(c) désorption isotherme
(a)
courbe de réfernce
10³/T K
2
2,5
3

FIG-2

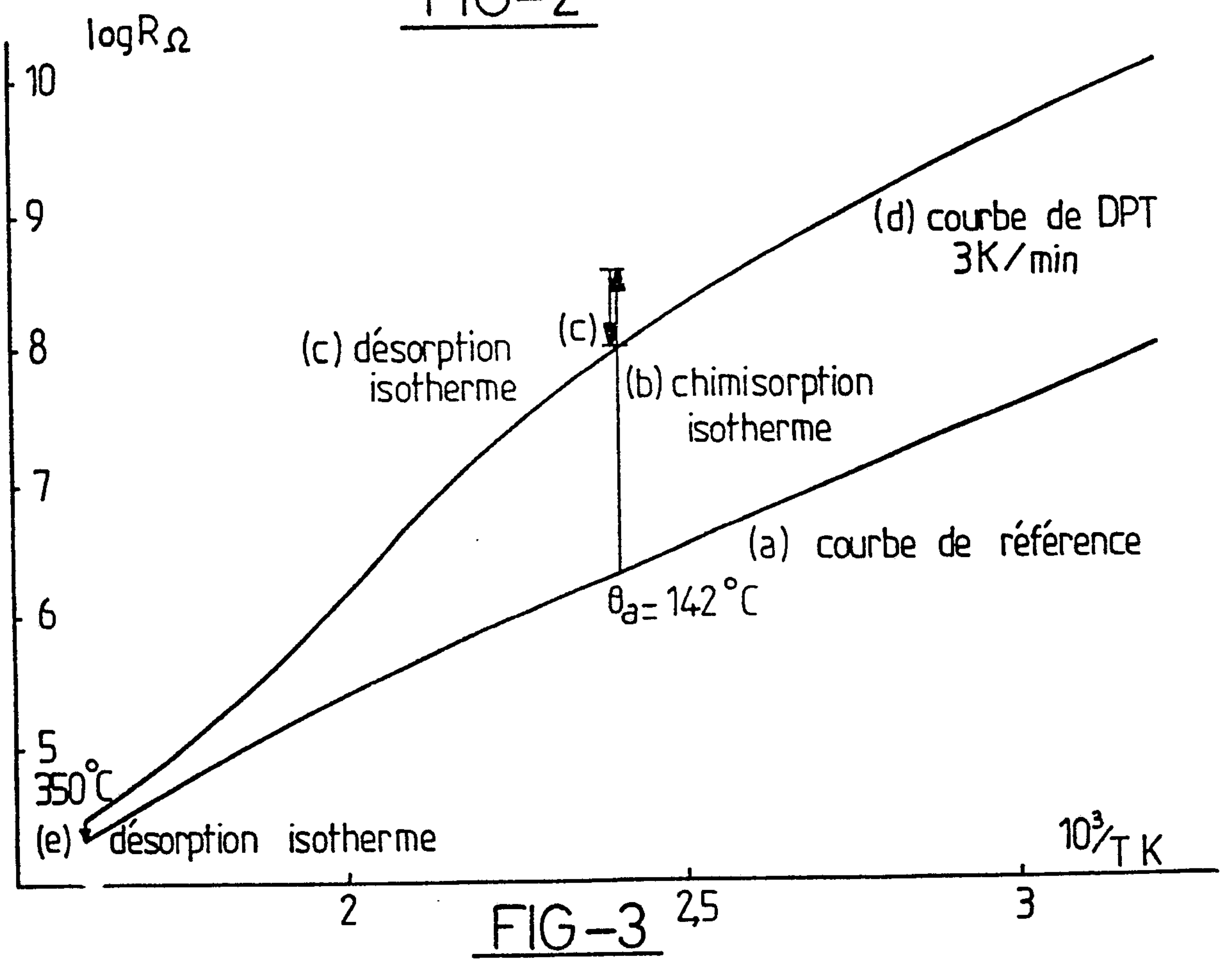
log R Ω
10
9
8
7
6
5
350°C
(e) désorption isotherme
(d) courbe de DPT
3K/min
(c)
(c) désorption
isotherme
(b) chimisorption
isotherme
(a) courbe de référence
θa= 142 °C
10³/T K
2
2,5
3

FIG-3

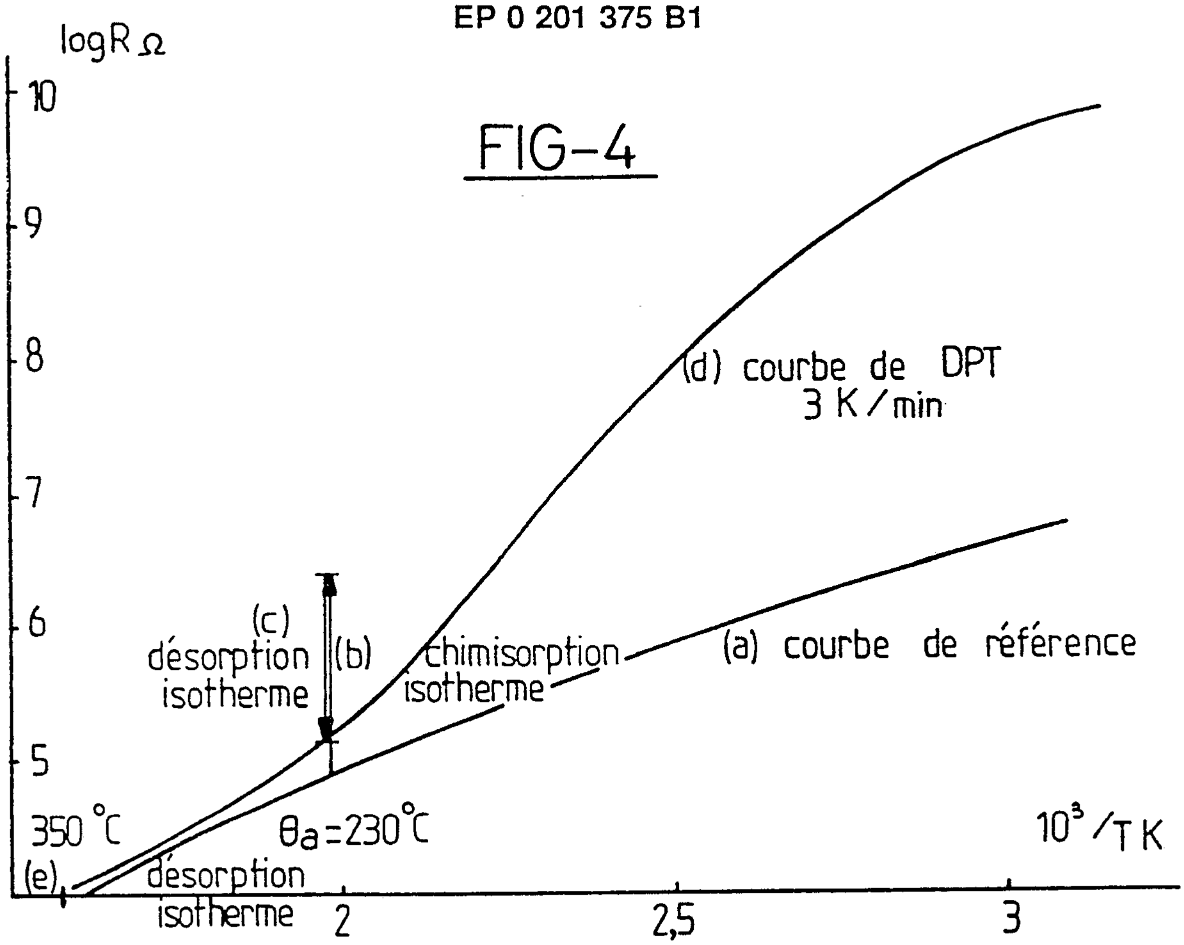
log R Ω
10
9
8
7
6
5
(d) courbe de DPT
3 K / min
(c)
désorption
isotherme
(b)
chimisorption
isotherme
(a) courbe de réference
350 °C
θa = 230°C
$10^3$ / T K
(e)
désorption
isotherme
2
2,5
3

FIG-4

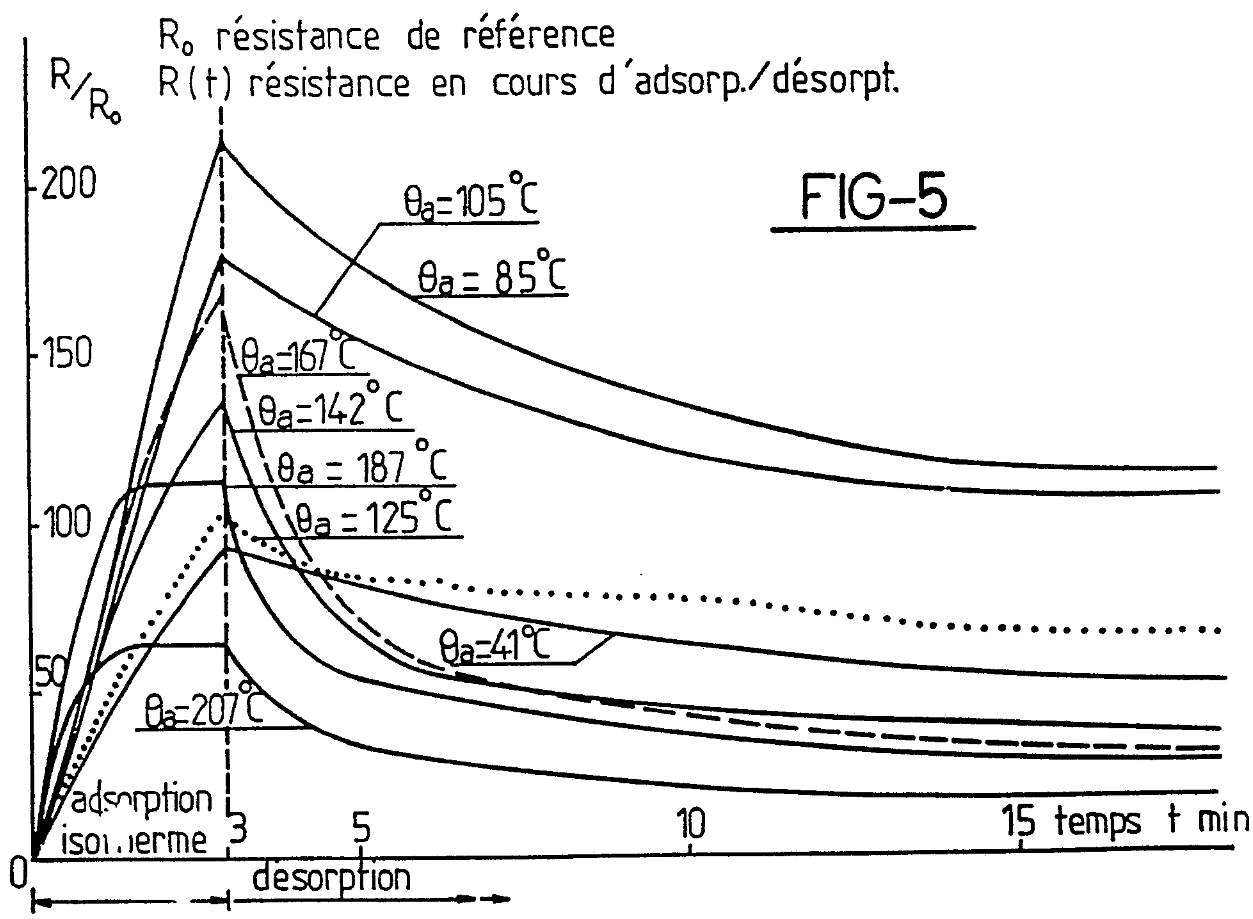
R/R₀
R₀ résistance de référence
R(t) résistance en cours d'adsorp./désorpt.
200
150
100
50
0
θa = 105°C
θa = 85°C
θa = 167°C
θa = 142°C
θa = 187°C
θa = 125°C
θa = 41°C
θa = 207°C
adsorption
isotherme
3
5
10
15 temps t min
desorption

FIG-5

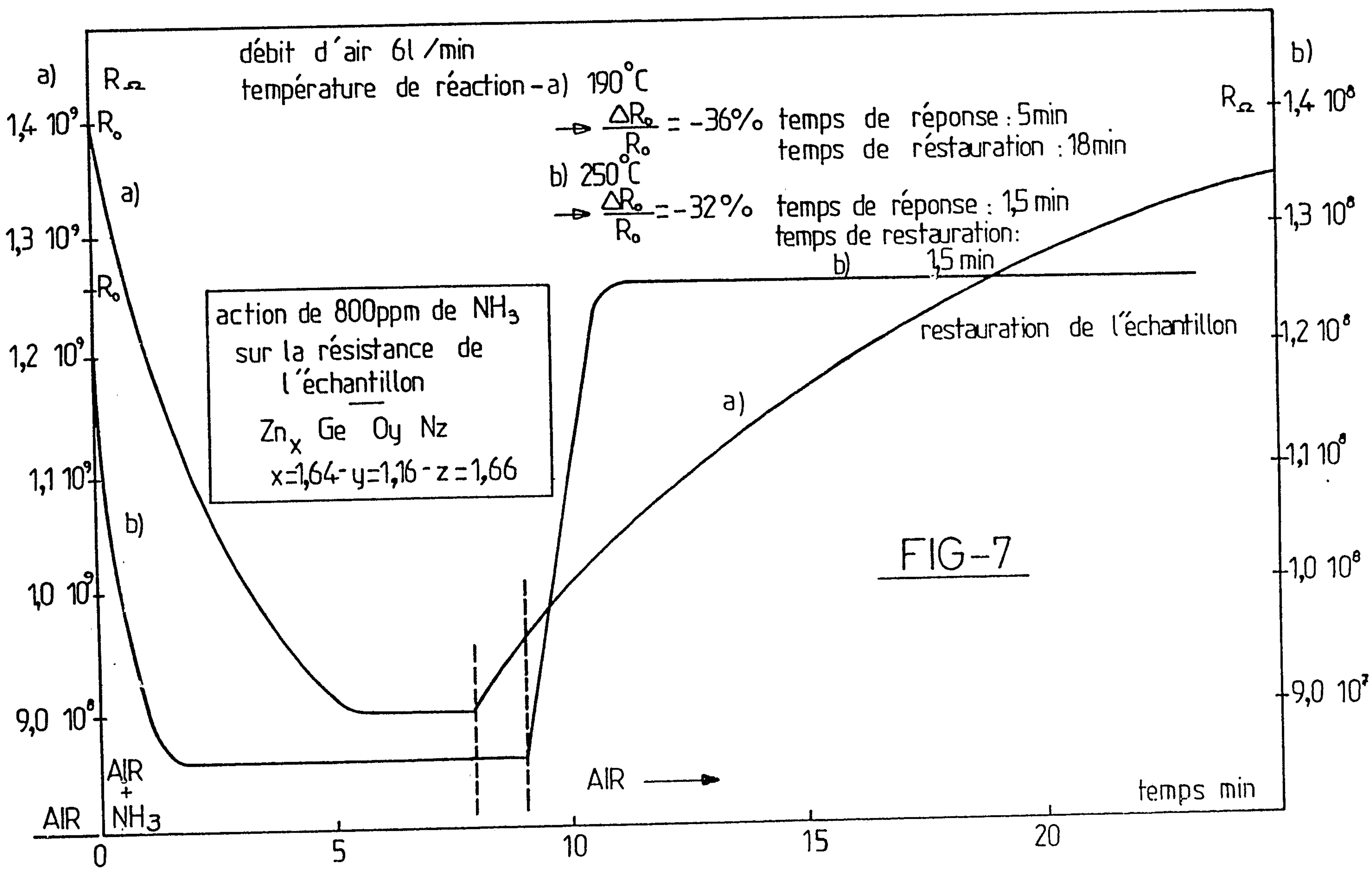
débit d'air 6l /min
température de réaction - a) 190°C
→ $\frac{\Delta R_o}{R_o}$ = -36% temps de réponse : 5min
temps de réstauration : 18min
b) 250°C
→ $\frac{\Delta R_o}{R_o}$ = -32% temps de réponse : 1,5 min
temps de restauration: 1,5 min
restauration de l'échantillon
action de 800ppm de $NH_3$ sur la résistance de l'échantillon
$Zn_x$ Ge Oy Nz
x=1,64 - y=1,16 - z=1,66
a)
b)
$R_\Omega$
$R_o$
1,4 $10^9$
1,3 $10^9$
1,2 $10^9$
1,1 $10^9$
1,0 $10^9$
9,0 $10^8$
1,4 $10^8$
1,3 $10^8$
1,2 $10^8$
1,1 $10^8$
1,0 $10^8$
9,0 $10^7$
AIR
AIR + $NH_3$
AIR →
temps min
0
5
10
15
20

FIG-7

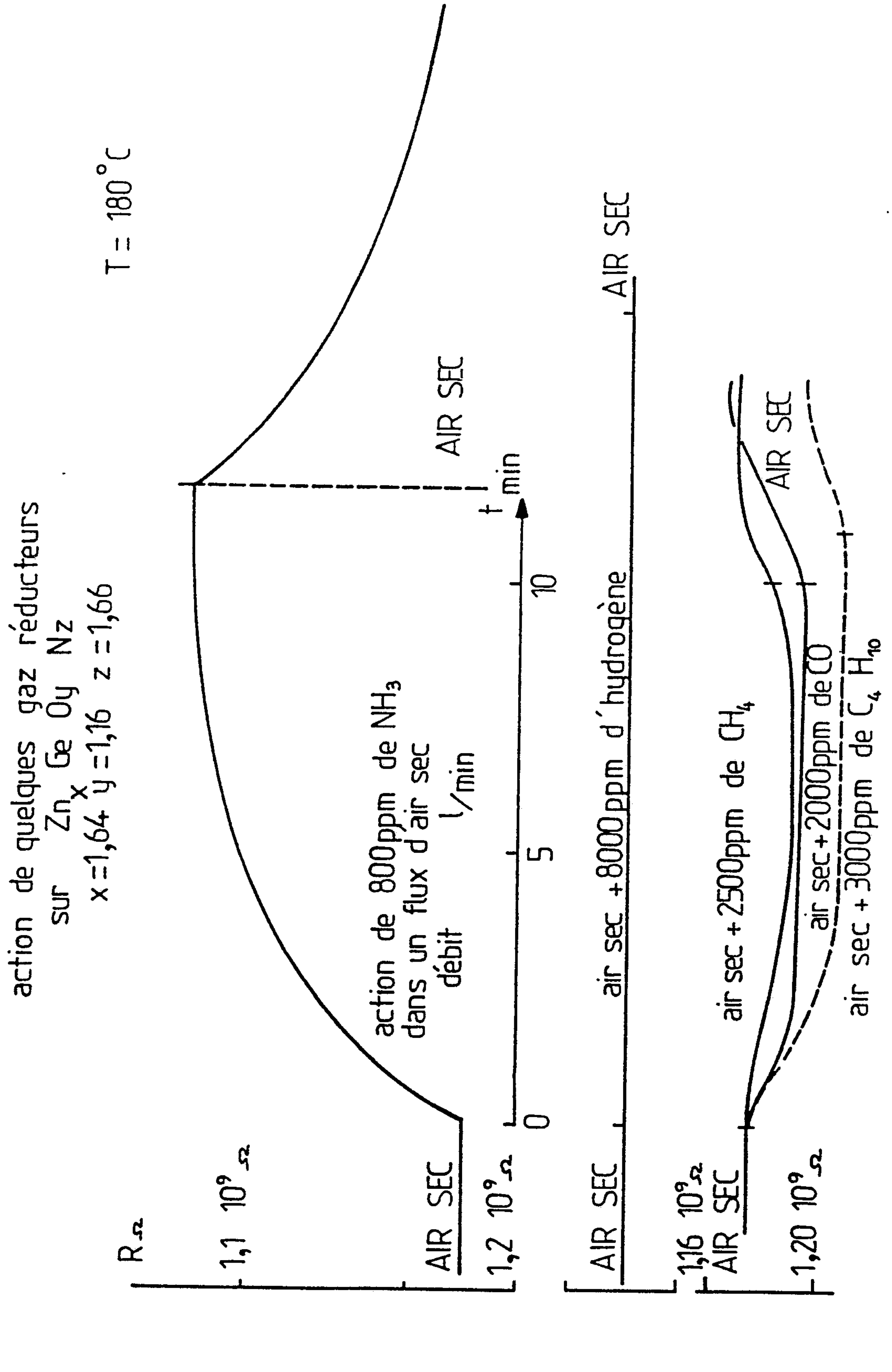

action de quelques gaz réducteurs
sur $Zn_x Ge Oy Nz$
x = 1,64 y = 1,16 z = 1,66
T = 180 °C
$R_\Omega$
1,1 $10^9 \Omega$
1,2 $10^9 \Omega$
AIR SEC
action de 800ppm de $NH_3$
dans un flux d'air sec
débit l/min
0
5
10
t min
AIR SEC
air sec +8000ppm d'hydrogène
AIR SEC
AIR SEC
1,16 $10^9 \Omega$
AIR SEC
1,20 $10^9 \Omega$
air sec + 2500ppm de $CH_4$
air sec + 2000ppm de CO
air sec + 3000ppm de $C_4 H_{10}$
AIR SEC


FIG-8

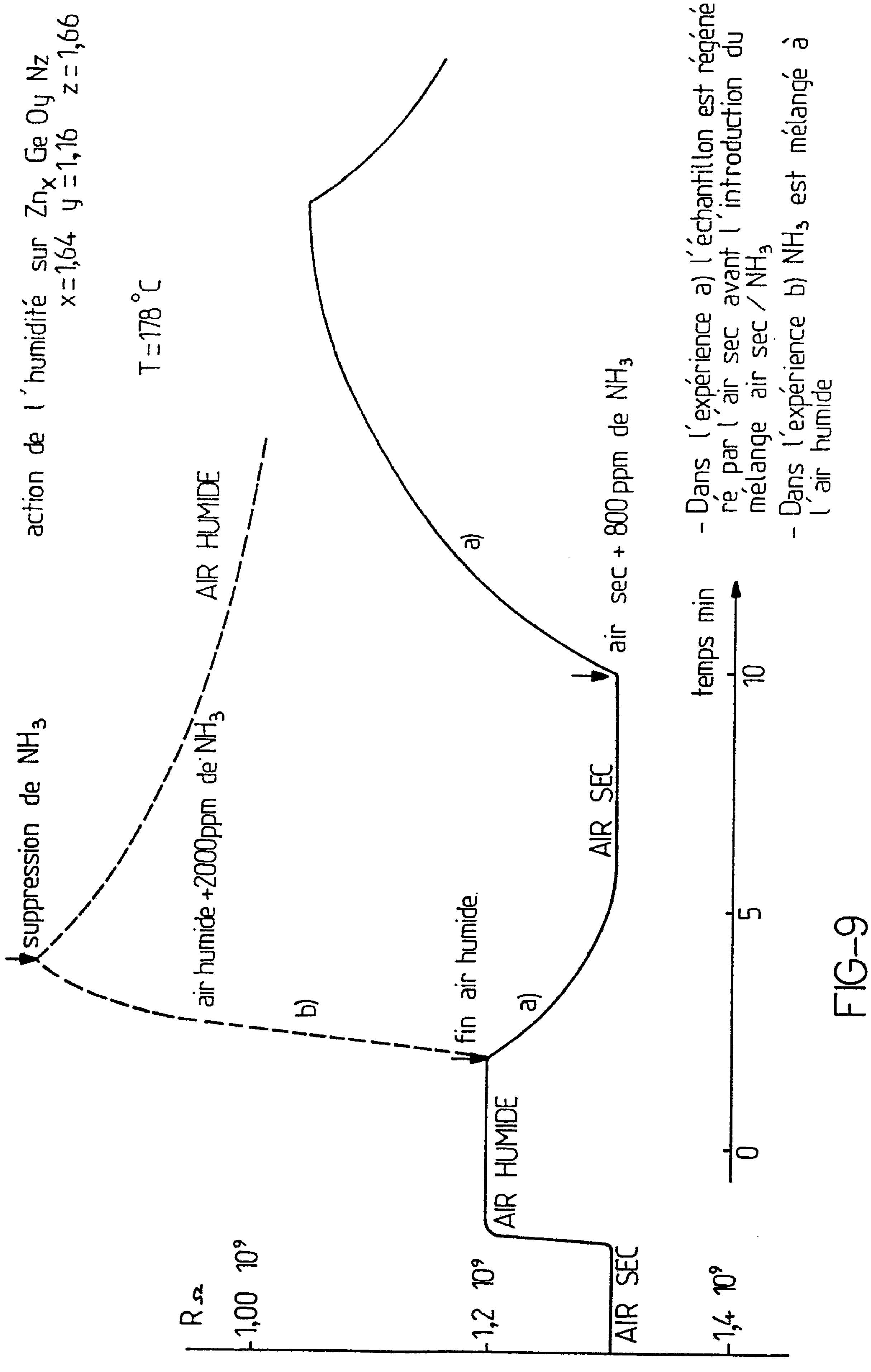
action de l'humidité sur $Zn_x$ Ge Oy Nz
x=1,64 y=1,16 z=1,66
T=178 °C
suppression de $NH_3$
AIR HUMIDE
air humide +2000ppm de $NH_3$
b)
fin air humide
a)
AIR SEC
air sec + 800ppm de $NH_3$
a)
R Ω
1,00 $10^9$
1,2 $10^9$
1,4 $10^9$
AIR SEC
AIR HUMIDE
0
5
10
temps min
- Dans l'expérience a) l'échantillon est régénéré par l'air sec avant l'introduction du mélange air sec / $NH_3$
- Dans l'expérience b) $NH_3$ est mélangé à l'air humide

FIG-9